# EUROPÄISCHE PATENTSCHRIFT

(11) **EP 1 183 165 B1**
(45) Veröffentlichungstag und Bekanntmachung des Hinweises auf die Patenterteilung: **22.03.2006**
(21) Anmeldenummer: 00929554.4
(22) Anmeldetag: 25.05.2000
(51) Int. Cl.: B60R 16/02, F02D 41/00

(54) **ELEKTRISCHES VERDRAHTUNGSSYSTEM FÜR DIE ANTRIEBSEINHEIT IN FAHRZEUGEN**
ELECTRICAL WIRING SYSTEM FOR THE DRIVE UNIT IN VEHICLES
SYSTEME DE CABLAGE ELECTRIQUE POUR L'UNITE D'ENTRAINEMENT DANS DES VEHICULES

(30) Priorität: 25.05.1999 DE 19923893
(43) Veröffentlichungstag der Anmeldung: 06.03.2002
(73) Patentinhaber: Lisa Dräxlmaier GmbH, 84137 Vilsbiburg (DE); Bayerische Motoren Werke Aktiengesellschaft, 80788 München (DE); Hentschel, Gabriele, 84137 Vilsbiburg (DE)
(72) Erfinder: HENTSCHEL, Andreas, deceased (DE); KASPRZOK, Manfred, D-84160 Frontenhausen (DE); GRÖBMAIR, Max, D-83623 Dietramszell (DE); ECKSTEIN, Fred, D-80689 München (DE)
(74) Vertreter: HOFFMANN EITLE
(86) Internationale Anmeldenummer: PCT/EP2000/004788
(87) Internationale Veröffentlichungsnummer: WO 2000/071388

(56) Entgegenhaltungen:
- EP-A- 0 031 400
- EP-A- 0 674 100
- EP-A- 0 740 365
- EP-A- 0 768 212
- EP-A- 0 857 618
- DE-A- 3 616 455
- DE-A- 4 211 650
- DE-A- 19 718 920
- GB-A- 2 165 398
- US-A- 3 996 914
- SENNINGER H.; BIBBY R.; MILLEN R.: 'Motorangebaute Elektronik-Steuergeräte - Ein Vergleich von heutigen und zukünftigen Technologien' VDI-BERICHTE Nr. 1287, 1996, DOSSELDORF (DE), Seiten 521 - 547

## Beschreibung

### Technisches Gebiet

Die Erfindung betrifft ein elektrisches Verdrahtungssystem für die Antriebseinheit in Fahrzeugen, das nachfolgend kurz als Verdrahtung bezeichnet wird. Insbesondere ist die Verdrahtung für die Antriebseinheit, also insbesondere Verbrennungsmotor und Getriebe, eines Kraftfahrzeugs vorgesehen, sie kann jedoch ebenso für Motorradmotoren, Bootsmotoren oder Flugzeugmotoren bzw. deren Antriebseinheiten eingesetzt werden.

### Stand der Technik

Bisher ist im Motorraum eines Kraftfahrzeugs ein sogenannter Motorkabelbaum vorgesehen, der die Funktionsaggregate des Verbrennungsmotors und sonstige elektrische Funktionsaggregate im Motorraum untereinander und mit dem übrigen Fahrzeug im Hinblick auf die Versorgung mit elektrischer Leistung sowie den Austausch von Daten und Signalen verbindet. Solche Funktionsaggregate sind insbesondere Sensoren, wie Klopf- oder Ölniveausensoren, und Aktuatoren, wie Einspritz- oder Zündungseinrichtungen. Neben elektrischen Leitungen können Motorkabelbäume insbesondere auch optische Leitungen, etwa Lichtwellenleiter, umfassen. Herkömmliche Motorkabelbäume wie beispiels weise in der DE 3824857 weisen eine baumartige Struktur mit einer Vielzahl von Abzweigungen und Verästelungen auf. Die Herstellung eines solchen Kabelbaums erfordert einen hohen manuellen Fertigungsaufwand. Ein weiteres Problem liegt darin, daß aufgrund der stark zunehmenden Anzahl an Funktionsaggregaten und Funktionsinhalten an Motor und Getriebe die Motorkabelbäume immer mehr Leitungen umfassen und daher an Gewicht und Volumen zunehmen. Somit stellt die Unterbringung des Motorkabelbaums im Motorraum die Konstrukteure vor zunehmende Schwierigkeiten.

Weiterhin sind heutzutage sogenannte Elektronik-Boxen (E-Boxen) karrosseriefest im Motorraum untergebracht, die an den Motorkabelbaum angeschlossen sind. Solche E-Boxen wie beispielsweise in der WO96/00156 und der DE 195 11 755 offenbart enthalten eine immer größere Anzahl an elektronischen Steuergeräten für den Motor und dessen Aggregate sowie Relaisbausteine. Die Steuergeräte sind mit eigenen Umgehäusen versehen, die zum Teil passive Kühlelemente beinhalten. Die Steuergeräte und Relais sind wiederum in einem voluminösen Kunststoffgehäuse der E-Box untergebracht. Dabei sind die Steuergeräte und Relais einzeln über Steckanschlüsse und Stecksockel direkt an den Kabelbaum angesteckt. Somit ergibt sich zum einen ein erhebliches Bauvolumen für die E-Box, was wiederum Probleme der Unterbringung aufwirft, und zum anderen entsteht ein hoher Montageaufwand durch die manuelle Herstellung der zahlreichen Steckverbindungen zwischen Motorkabelbaum und E-Box.

Ferner beschreibt die EP 0 857 618 A2 eine Motorsteuereinrichtung , die an einem Abschnitt des Motors am Motorblock angebracht ist. Ferner weist die Motorsteuereinheit eine Schaltkreisplatine mit einer CPU auf. Die Motorsteuereinheit ist am Motor angeordnet und mittels eines herkömmlichen Motorkabelbaums mit Schaltern und Funktionsaggregaten verbunden (vgl. Spalte 3, Zeile 50 bis 58).

Die EP 0 674 100 A1 beschreibt ein elektrisches Verdrahtungssystem zum Betrieb und zur Steuerung von Sensoren, Aletuatoren und Funktionsaggregaten eines Fahrzeugs. Eine elektronische Steuereinrichtung ist elektrisch mit dem Fahrzeug und Funktionsaggregaten des Motors oder in einem umgebenden Motorraum verbindbar, wobei lösbare Verbinder an der elektronischen Steuereinrichtung Vorgesehen sind. In der elektronischen Steuereinrichtung sind die Verschaltungen zwischen den elektrischen Verbindungen ausgebildet. Durch getrennt vorliegende kabelbündel kann die Funktion von Sensoren, Aktuatoren und Funktionsaggregaten getrennt für Motor, Luftausangeinrichtung und Fahrzeugkarosserie überprüft, werden. Die EP 0 674 100 A1 stellt den nächstkommenden Stand der Technik dar.

### Darstellung der Erfindung

Der Erfindung liegt das technische Problem zugrunde, ein elektrisches Verdrahtungssystem für die Antriebseinheit in einem Fahrzeug zu schaffen, bei dem bei einfaches Montage verschiedene Motor varianten realisterbar sind.

Dieses technische Problem wird erfindungsgemäß von einem elektrischen Verdrahtungssystem mit den Merkmalen des Patentanspruchs 1 sowie von einer Antriebsanordnung mit den Merkmalen des nebengeordneten Patentanspruchs 7 gelöst.

Der Erfindung liegt der Gedanke zugrunde, eine zentrale Verteilungseinheit vorzusehen, der die vom Fahrzeug kommenden elektrischen Verbindungen zentral zugeführt werden und von der die elektrischen Verbindungen zu den Funktionsaggregaten der Antriebseinheit oder im Motorraum zentral abgehen. Die ersten elektrischen Verbindungen zwischen Fahrzeug und der zentralen Verteilungseinheit sowie die zweiten elektrischen Verbindungen zwischen der zentralen Verteilungseinheit und den Funktionsaggregaten sind jeweils als elektrisch verzweigungsfreie Punkt-zu-Punkt-Verbindungen ausgeführt. Die zugehörigen Verschaltungen der ersten und zweiten elektrischen Verbindungen werden in der zentralen Verteilungseinheit realisiert. Diese zentrale Verteilungseinheit ist an der Antriebseinheit plaziert und umfaßt eine Steuerungsplattform mit zumindest einer elektronischen Steuerungsbaugruppe.

Aufgrund dieses Verdrahtungskonzepts mit zentraler Verschaltung und elektrischen Punkt-zu-Punkt-Verbindungen gibt es keine elektrischen Verzweigungen wie bei herkömmlichen Motorkabelbäumen. Es entfallen somit auch Kabelendverbinder, die bisher aufwändig manuell am Kabelbaum hergestellt werden mußten. Dafür war es z.B. erforderlich, bestimmte abisolierte Kabelenden zu deren Verschaltung manuell zusammenzuführen, miteinander zu verlöten (bzw. zu verschweißen oder zu vercrimpen) und mit einer Schutzkappe zu versehen. Bei der erfindungsgemäßen Verdrahtung werden nun Verbindungsleitungen eingesetzt, die sich hinsichtlich Pin-Zahl, Länge, Leitungsquerschnitt etc. standardisieren lassen. Dabei können mehrere elektrische Punkt-zu-Punkt-Verbindungen zumindest streckenweise räumlich zusammengefaßt werden, z.B. in Form einer Folienleitung mit mehreren parallel nebeneinander verlaufenden elektrischen Leiterbahnen. Solche einzelnen Leiterbahnen können dann bei Bedarf natürlich geometrisch von der Folienleitung abgezweigt werden. D.h., die Folienleitung kann - z.B. durch gezieltes Aufschneiden oder Auftrennen ihrer Folienverbindungen zwischen den elektrischen Leiterbahnen - nach und nach in einzelne Leiterbahnen aufgefächert werden, um diese jeweils den entsprechenden Anschlußstellen räumlich zuführen zu können.

Erfindungsgemäß sind also elektrisch verzweigungsfreie Punkt-zu-Punkt-Verbindungen vorgesehen, d.h. einzelne Leiterbahnen oder Leiter, z.B. Kupferleitungsadern, enthalten keine elektrischen Abzweige oder Abgriffe. Eine geometrische, d.h. räumliche Verzweigung oder Auffächerung von Leitungsbündeln, Folienleitern etc. ist dabei erfindungsgemäß natürlich möglich, sofern die einzelnen elektrischen Leiter bzw. Leiterbahnen jeweils nur elektrische Punkt-zu-Punkt-Verbindungen ausbilden.

Solche standardisierbaren Verbindungsleitungen können automatisiert hergestellt werden, da die Verbindungsleitungen selbst keine Verschaltungen mehr enthalten. Daraus ergeben sich entsprechende Fertigungsvorteile und der manuelle Fertigungsaufwand bei der erfindungsgemäßen Verdrahtung kann minimiert werden.

Auch durch die erfindungsgemäße Anordnung der zentralen Verteilungseinheit direkt an der Antriebseinheit und durch die Integration der elektronischen Steuerungsbaugruppen in der zentralen Verteilungseinheit können Leitungsumfänge wesentlich reduziert und Leitungslängen eingespart werden. Die elektronischen Steuerungsbaugruppen, die funktionell den bisher üblichen Steuergeräten entsprechen, können nun erfindungsgemäß ohne individuelle Umgehäuse direkt auf der Steuerungsplattform integriert werden. Hierfür ist die Steuerungsplattform vorzugsweise als starre oder flexible Schaltplatine oder FPC(Flexible Printed Circuit)-Platine ausgestaltet. Sie kann aber auch in anderen geeigneten, dem Fachmann bekannten Techniken als starres oder flexibles Bauteil ausgeführt sein, z.B. als gedruckte oder geätzte Schaltplatte oder in MID(Moulded Interconnect Device)-Technik. Die Steuerungsplattform nimmt bevorzugt auch die Kontakt- und Schnittstellen zu den Verbindungsleitungen auf.

Die herkömmlichen E-Boxen mit ihren zahlreichen Schnittstellen und Steckplätzen sowie ihrem erheblichen Bauvolumen können erfindungsgemäß also aufgelöst werden. Stattdessen können die herkömmlichen Steuergeräte mit ihren Umgehäusen durch direkt auf der Steuerungsplattform realisierte Steuerelektronikbaugruppen ersetzt werden. Die Verschaltung der elektrischen Verbindungsleitungen wird unter Einbindung der Steuerelektronik -ebenfalls auf der Steuerungsplattform realisiert. Damit entfallen auch zahlreiche voluminöse und teuere Steck- und Kabelverbindungen, wie sie bisher z.B. in der E-Box erforderlich sind. Ebenso entfällt das arbeitsintensive manuelle Verbinden der Motorkabelbaumstecker mit den einzelnen Steuergeräten, Relaissteckplätzen etc..

Erfindungsgemäß wurde herausgefunden, daß eine Plazierung der zentralen Verteilungseinheit mit der Steuerelektronik am Antriebsaggregat möglich ist. Vorzugsweise wird die zentrale Verteilungseinheit an einem Verbrennungsmotor oder entsprechendem Antriebsmotor der Antriebseinheit oder an Anbauteilen des Verbrennungsmotors bzw. Antriebsmotors angeordnet. In günstigen Ausführungen ist die zentrale Verteilungseinheit an der Sauganlage, dem Luftfilter oder als integraler Bestandteil einer bereits vorhandenen Motorkomponente oder eines Motoranbauteils angeordnet. Weiterhin kann die zentrale Verteilungseinheit am Schalt- oder Automatikgetriebe der Antriebseinheit plaziert sein. Im Falle der Anordnung am Antriebsmotor oder dessen Anbauteilen erhält man einen komplett vorverkabelten Motor mit zugehöriger Steuerelektronik, der als eigene Einheit komplett funktionsgeprüft werden kann. Auf diese Weise kann der Motor mit Verdrahtung und Steuerung z.B. in einem anderen Land gefertigt werden als das übrige Fahrzeug und als komplett funktionsgeprüftes Modul einbaufertig an das Endmontageband geliefert werden. Bisher konnten zahlreiche Funktionsprüfungen erst nach der Montage des Motorkabelbaums im Fahrzeug und der Herstellung der vielen Verbindungen des Motorkabelbaums zur E-Box vorgenommen werden.

Aus der EP 0 031 400 A2 ist zwar eine am Fahrzeugrahmen-Vorderteil befestigte Abzweigdose bekannt, die die elektrische Energie von der elektrischen Versorgungsquelle bis zu den Stromverbrauchern verteilt, welche die vordere Außenbeleuchtung des Fahrzeugs, die Signalhörner und die mit dem Fahrzeugmotor vereinigten Verbraucher umfassen. Hierbei erfolgt aber lediglich die bloße Verteilung des Stroms, ohne jegliche zusätzliche Funktionsinhalte in der Verteilerdose. Auch ist hier keineswegs eine zentrale Anordnung an der Antriebseinheit in Erwägung gezogen.

Zweckmäßigerweise übernimmt die zumindest eine elektronische Steuerungsbaugruppe Motorsteuerungsfunktionen und/oder Getriebesteuerungsfunktionen. Bevorzugt trägt die Steuerungsplattform zusätzlich aktive und/oder passive elektrische und/oder elektronische Bauelemente oder Baugruppen, wie z.B. Leistungsendstufen, Relais, Sicherungen, Kondensatoren, Entstörwiderstände, Dioden oder dergleichen, die in die Verschaltungen zwischen den ersten und zweiten elektrischen Verbindungen eingebunden bzw. integriert sind. In der zentralen Verteilungseinheit kann außerdem auch ein Fremdstartstützpunkt oder Hochstromanschluß ausgebildet sein. Ferner können Diagnoseanschlüsse vorhanden sein.

Die Steuerungsplattform ist modular gestaltet. Damit können verschiedene Motorvarianten durch Hinzufügen oder Entfernen modularer Plattformteile realisiert werden. Aber auch im Reparaturfall können so ggf. einzelne Module ausgetauscht werden.

Erfindungsgemäß ergibt sich für die Verdrahtung ein klar strukturierter Aufbau, der sich - wie aus einem Baukasten - je nach den konkreten Anforderungen zusammenstellen läßt. Durch dieses Baukastenprinzip können die Verbindungsleitungen in hohem Maße standardisiert und automatisiert hergestellt werden. Damit ergibt sich eine wesentliche Vereinfachung des Aufbaus und der Fertigung der Verdrahtung.

Die zentrale Verteilungseinheit kann im Falle verschiedener Motorvarianten für die Maximalanforderung konfiguriert werden, so daß dieselbe Verteilungseinheit für die verschiedenen Varianten in gleicher.Bauform eingesetzt werden kann. Je nach Variante werden ggf. weniger oder andere Verbindungsleitungen an der Verteilungseinheit angeschlossen. Ebenso werden je nach Variante ggf. weniger oder andere elektrische/elektronische Funktionsbauteile auf der Steuerungsplattform plaziert. Variantenspezifische Verschaltungen können in der zentralen Verteilungseinheit durch Einsatz von Schaltbrücken, sogenannten Jumpern, einfach realisiert werden.

Es kann auch eine Bus-Verbindungsleitung eingesetzt werden, um die zentrale Verteilungseinheit in Multiplex-Technik mit den Fahrzeug zu verbinden. Insgesamt kann also die Zahl der ersten Verbindungsleitungen minimiert werden. Was die elektrische Leistungsversorgung anbelangt, ist ggf. nur noch eine einzige Versorgungsleitung erforderlich, die die zentrale Verteilungseinheit mit der Fahrzeugbatterie verbindet. Im Gegensatz zu dem im Bereich des Kabelbaumstammes immer dicker werdenden Kabelbündel bei einem herkömmlichen Motorkabelbaum kann man erfindungsgemäß eine minimierte Anzahl von ersten Verbindungsleitungen zwischen Fahrzeug und Verteilungseinheit realisieren, die wenig Bauvolumen beanspruchen und sich gut im Motorraum unterbringen lassen.

Aufgrund des erfindungsgemäßen Baukastenprinzips können auch technische Änderungen der Verdrahtung durch eine entsprechende Umgestaltung der Verteilungseinheit relativ einfach umgesetzt werden, während bisher der gesamte Kabelbaumaufbau abgeändert werden mußte.

Bei der räumlichen Konfiguration der Steuerungsplattform bzw. der zentralen Verteilungseinheit können Verbindungsleitungen, die sich gegenseitig elektromagnetisch stören könnten, in genau definierter Weise räumlich so voneinander beabstandet angeordnet werden, daß deren elektromagnetische Verträglichkeit gewährleistet ist. Die zentrale Verteilungseinheit sorgt für eine berechenbare und klar definierte Lage der Leitungen zueinander. Zusätzlich können im Bereich der zentralen Verteilungseinheit vergleichsweise einfach Schirmmaßnahmen, z.B. durch Anbringung von Schirmstegen, Schirmblechen oder Umhüllungen, erfolgen. Bei bisherigen Kabelbäumen befinden sich dagegen die verschiedenen Verbindungsleitungen undefiniert in den Kabelsträngen, so daß die gegenseitige Einflußnahme der Leitungen unbestimmt ist. Aufgrund der zunehmenden Problematik der elektromagnetischen Verträglichkeit müssen bisher z.B. häufig teuere verdrillte oder geschirmte Leitungen eingesetzt werden.

Unter dem hier verwendeten Begriff Verbindungsleitungen werden neben Verbindungskabeln wie ummantelten Kupferleitungen auch verschiedenste andere Leitungen wie Folienleitungen, Flachbandkabel, Hybridleitungen etc. verstanden, insbesondere auch Kombinationsleitungen, die in einer gemeinsamen Ummantelung Datenleiter und Energieversorgungsleiter enthalten. Bei Bedarf können auch optische Lichtwellenleiter, Pneumatik- oder Fluidleitungen zusätzlich in der Verdrahtung mitverlegt werden. Ebenso ist es denkbar, daß im Bedarfsfall auch einzelne Leitungen in Form einer Bypass-Leitung an der zentralen Verteilungseinheit vorbei verlegt werden.

Unter dem Begriff Funktionsaggregate am Motor oder im Motorraum werden verschiedenste Sensoren, Aktuatoren, elektrische Verbraucher und dgl. verstanden. Solche Funktionsaggregate, die über die zweiten Verbindungsleitungen mit der zentralen Verteilungseinheit verbunden werden, sind beispielsweise Zündspulenanschlüsse, variable Nockenwellensteuerungen, variable Ventiltriebsteuerungen, Klopfsensoren, Drehzahl- und Drehwinkelsensoren, Lamda-Sonden, Meßfühler oder Einspritzventile.

Die Kontaktierungen zwischen den Verbindungsleitungen und der zentralen Verteilungseinheit können auf unterschiedlichste Weise realisiert werden. Hier können Steckverbindungen, Klemmkontaktierungen, Lötverbindungen, Schweißverbindungen oder ähnliches vorgesehen werden. Es kommen also sowohl lösbare als auch nicht-lösbare Verbindungen in Frage.

Erfindungsgemäß ergibt sich also ein Verdrahtungskonzept, das gut geeignet ist für eine weitgehend automatisierte Fertigung, das sich hinsichtlich des Bauvolumens optimieren läßt, das flexibel im Hinblick auf Variantenbildungen und technische Änderungen ist und sich durch eine klar gegliederte Struktur der Verdrahtung auszeichnet. Die Zahl der Steckverbindungen wird reduziert, und damit reduzieren sich auch die Kosten und der Montageaufwand. Aufgrund des übersichtlich gegliederten räumlichen Aufbaus der erfindungsgemäßen Verdrahtung können auch Verdrahtungsfehler bei der Montage reduziert werden, d.h. es läßt sich eine weitere Qualitätssteigerung erzielen, und der Austausch einzelner Verbindungsleitungen ist problemlos durchführbar. Auch elektromagnetische Verträglichkeitprobleme können minimiert werden, indem störanfällige Leitungen durch eine entsprechende Konfiguration der Verdrahtung weit von entsprechenden Störquellen entfernt angesiedelt werden. Mit der Trägerfunktion der zentralen Verteilungseinheit für elektrische und/oder elektronische Funktionsbauteile, wie etwa Zündendstufen, Sicherungsschalter oder Steuergeräte, kann die Anzahl der erforderlichen Verbindungsleitungen und die Anzahl der Steckverbindungen weiter optimiert werden.

Durch die Plazierung der zentralen Verteilungseinheit an der Antriebseinheit, insbesondere am Motor, und die Integration der Steuergeräte, wie Motorsteuergeräte für Zündung, Einspritzung, variablen Ventiltrieb etc., in der zentralen Verteilungseinheit wird der Motor zu einem autarken Gebilde, d.h. die Motoreinheit kann inklusive Elektrik/Elektronik separat geprüft werden. Beispielsweise kann auch ein Diagnosestecker vorgesehen werden.

Die zentrale Verteilungseinheit kann als integraler Bestandteil einer bereits bestehenden Motorkomponente, z.B. des Zylinderkopfdeckels, der Sauganlage oder des Luftfilters des Verbrennungsmotors, angeordnet sein. So kann eine solche Motorkomponente vorteilhaft als Trägereinheit und ggf. Schutzeinheit zur Anordnung der zentralen Verteilungseinheit genutzt werden.

Die zentrale Verteilungseinheit wird nach Bedarf mit einem geeigneten Schutzgehäuse zum mechanischen Schutz gegen Schmutz, Feuchtigkeit etc. sowie einer eigenen aktiven Kühlung, z.B. einem Lüfter, zum thermischen Schutz versehen. Erfindungsgemäß wurde erkannt, daß sich die zentrale Verteilungseinheit trotz der am Verbrennungsmotor auftretenden erhöhten Temperaturbedingungen vorteilhaft direkt an der Antriebseinheit plazieren läßt. Das Schutzgehäuse der zentralen Verteilungseinheit sowie die darin enthaltenen Umfänge können in ihrer dreidimensionalen Gestalt und Anordnung gut an die räumlichen Gegebenheiten am vorgesehenen Plazierungsort angepaßt werden.

### Kurze Beschreibung der Zeichnungen

Nachfolgend ist eine Ausführungsbeispiel der Erfindung unter Bezugnahme auf die beigefügten Zeichnungen näher beschrieben. Es zeigt:
- Fig 1.: ein Ausführungsbeispiel des erfindungsgemäßen elektrischen Verdrahtungssystems in einer vereinfachten schematischen Draufsicht;
- Fig 2.: die zentrale Verteilungseinheit des Ausführungsbeispiels von Fig. 1 in einer schematischen Draufsicht.

### Beschreibung eines Ausführungsbeispiels der Erfindung

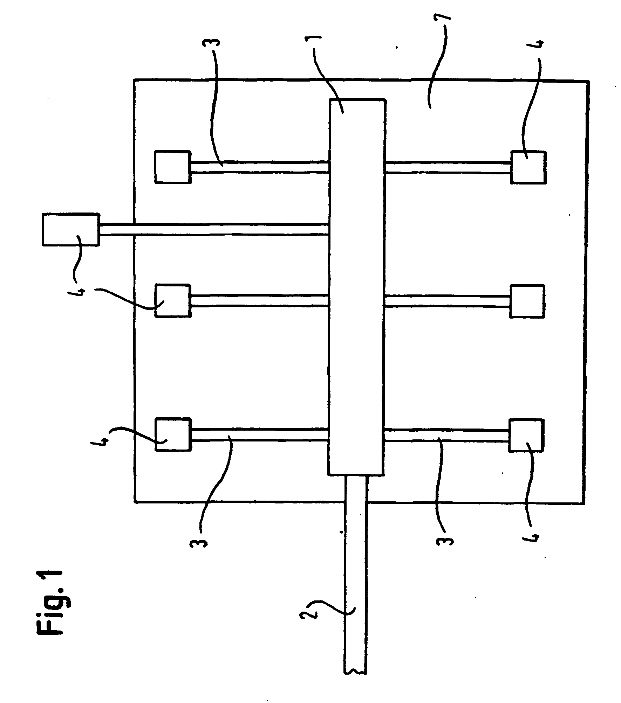

In Fig. 1 ist die Verdrahtung einer Antriebseinheit eines Kraftfahrzeugs dargestellt. Eine Antriebseinheit mit einem Verbrennungsmotor 7 ist schematisch eingezeichnet, während der Motorraum selbst und das übrige Kraftfahrzeug aus Gründen der Übersichtlichkeit nicht im einzelnen dargestellt sind. Von seiten des Kraftfahrzeugs führt eine Hauptverbindungsleitung 2 zur zentralen Verteilungseinheit 1. Von der Verteilungseinheit 1 führen Verbindungsleitungen 3 zu verschiedenen Funktionsaggregaten 4 des Verbrennungsmotors 7 und des Getriebes. Die Funktionsaggregate 4 sind beispielsweise Einspritzventile, Zündspulenanschlüsse oder Sensoren.

Sowohl die Hauptverbindungsleitung 2 als auch die Verbindungsleitungen 3 sind jeweils als elektrisch verzweigungsfreie Punkt-zu-Punkt-Verbindungen konfiguriert. Für die Verbindungen 2, 3 werden Leitungen eingesetzt, die hinsichtlich verschiedener Längenabmessungen, Leitungsquerschnitte und Pin-Zahlen standardisiert sind. Im Beispiel werden Folienleiter, z.B. sogenannte FFC (Flexible Flat Cable) für die Verbindungen 2, 3 verwendet.

Fig. 1 veranschaulicht lediglich das Grundprinzip der erfindungsgemäßen Verdrahtung. Von der zentralen Verteilungseinheit 1 können zahlreiche weitere (nicht dargestellte) elektrisch verzweigungsfreie Punkt-zu-Punkt-Verbindungen 3 zu weiteren Funktionsaggregaten 4 entweder am Motor oder im Motorraum realisiert werden.

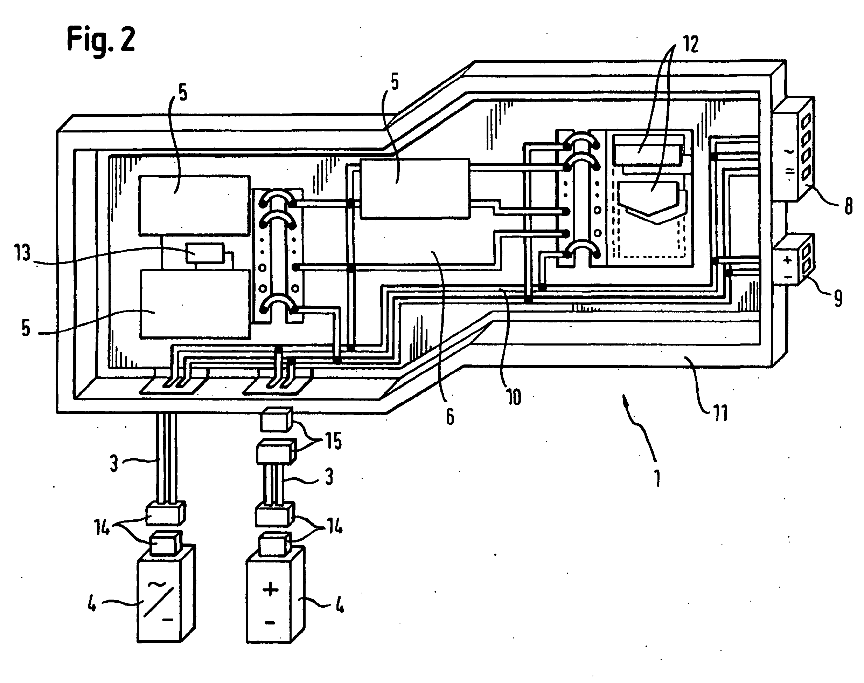

Die zentrale Verteilungseinheit 1 ist am Verbrennungsmotor 7 angeordnet, etwa auf der Sauganlage. Wie Fig. 2 verdeutlicht, umfaßt die zentrale Verteilungseinheit 1 ein Gehäuse 11 (in Fig. 2 ohne den zugehörigen Deckel dargestellt), in dem eine FPC(Flexible Printed Circuit)-Schaltplatine 6 angeordnet ist, die über Leiterbahnen 10 eine Verschaltung der Verbindungen 2, 3 realisiert. Weiterhin ist die Schaltplatine 6 mit elektronischen Steuerungsbaugruppen 5 bestückt, die verschiedene Motor- und Getriebefunktionen steuern, etwa Zünd-, Einspritz- oder Ventiltriebfunktionen eines Motormanagements. Außerdem ist die Schaltplatine 6 mit weiteren Funktionselementen 12 und 13 bestückt, etwa Transistorendstufen, Relais oder Sicherungsbausteinen.

In Fig. 2 ist auch eine Datenschnittstelle 8 zum Fahrzeug sowie eine zugehörige Energieversorgungsschnittstelle 9 zum Fahrzeug dargestellt. Hier werden die Verbindungsleitungen 2 zum Fahrzeug (vgl. Fig. 1) angeschlossen. Weiterhin sind in Fig. 2 beispielhaft zwei Verbindungsleitungen 3 von der zentralen Verteilungseinheit 1 zu Funktonsaggregaten 4 gezeigt. Die in Fig. 2 linke Verbindung 3 stellt einen sogenannten Kabelschwanz dar, der fest mit der Schaltplatine 6 kontaktiert ist und über eine Steckverbindung 14 mit dem Funktionsaggregat 4 verbunden wird. Die in Fig. 2 rechte Verbindung 3 wird über eine Steckverbindung 15 an der Verteilungseinheit 1 angeschlossen und über eine Steckverbindung 14 an das Funktionsaggregat 4.

## Patentansprüche

1. Elektrisches Verdrahtungssystem für die Antriebseinheit in Fahrzeugen, insbesondere für einen Verbrennungsmotor mit Getriebe, mit
- einer zentralen Verteilungseinheit (1),die am Antriebsmotor (7) oder dessen Anbauteilen angeordnet ist und eine Steuerungsplattform (6) mit zumindest einer elektronischen Steuerungsbaugruppe (5) umfasst, die die Steuerungselektronik des Antriebsmotors (7) enthält, wodurch der komplett vorverkabelte Antriebsmotor als eigene Einheit komplett funktionsgeprüft werden kann,
- ersten elektrischen Verbindungen (2) zwischen Fahrzeug und Verteilungseinheit (1),
- zweiten elektrischen Verbindungen (3) zwischen Verteilungseinheit (1) und Funktionsaggregaten (4) der Antriebseinheit (7) oder Funktionsaggregaten (4) in einem umgebenden Motorraum, die einen lösbaren Verbinder (14) aufweisen,
- wobei die ersten (2) und zweiten (3) elektrischen Verbindungen jeweils als elektrisch verzweigungsfreie Punkt-zu-Punkt-Verbindungen ausgebildet sind;
- die Verschaltungen zwischen den ersten (2) und zweiten (3) elektrischen Verbindungen in der zentralen Verteilungseinheit (1) ausgebildet sind; - motorvariantenspezifische Verschaltungen in der zentralen Verteilungseinheit (1) durch den Einsatz von Schaltbrücken realisiert werden; und
- die Steuerungsplattform (6) modular gestaltet ist, um verschiedene Motorvarianten durch Hinzufügen oder Entfernen modularer Plattformteile zu realisieren.

2. Elektrisches Verdrahtungssystem nach Anspruch 1, **dadurch gekennzeichnet, dass** die zentrale Verteilungseinheit (1) an einer Sauganlage des Verbrennungsmotors (7) angeordnet ist.

3. Elektrisches Verdrahtungssystem nach Anspruch 1, **dadurch gekennzeichnet, dass** die Steuerungsplattform (6) als Schaltplatine oder FPC (Flexible Printed Circuit)-Platine ausgebildet ist.

4. Elektrisches Verdrahtungssystem nach Anspruch 1, **dadurch gekennzeichnet, dass** die zumindest eine elektronische Steuerungsbaugruppe (5) Motorsteuerungsfunktionen und/oder Getriebesteuerungsfunktionen übernimmt.

5. Elektrisches Verdrahtungssystem nach Anspruch 1, **dadurch gekennzeichnet, dass** die Steuerungsplattform (6) zusätzlich aktive und/oder passive elektrische und/oder elektronische Bauelemente oder Baugruppen (12, 13) trägt.

6. Elektrisches Verdrahtungssystem nach Anspruch 5, **dadurch gekennzeichnet, dass** die elektrischen und/oder elektronischen Bauelemente oder Baugruppen (12, 13) Leistungsendstufen, Relais oder Sicherungen umfassen.

7. Antriebsanordnung eines Fahrzeugs mit
- einem Antriebsmotor (7), insbesondere Verbrennungsmotor, der Anbauteile und elektrische Funktionsaggregate (4) trägt, und
- einem elektrischen Verdrahtungssystem nach einem der vorhergehenden Ansprüche.

## Claims

1. Electrical wiring system for the drive unit in vehicles, in particular for an internal combustion engine with gearbox, with
- a central distribution unit (1) which is arranged on the drive motor (7) or attachments thereof and includes a control platform (6) with at least one electronic control assembly (5) containing control electronics for the drive motor (7), as a result of which the fully prewired drive motor can be fully subjected to function testing as a separate unit,
- first electrical connections (2) between vehicle and distribution unit (1),
- second electrical connections (2) between distribution unit (1) and function assemblies (4) of the drive unit (7) or function assemblies (4) in a surrounding motor compartment, which have a releasable connector (14),
- wherein the first (2) and second (3) electrical connections are in each case designed as electrically branch-free point-to-point connections;
- the circuitry between the first (2) and second (3) electrical connections is formed in the central distribution unit (1);
- motor variant-specific circuitry is formed in the central distribution unit (1) by the use of switching bridges; and
- the control platform (6) is of modular design in order to produce different motor variants by adding or removing modular platform portions.

2. Electrical wiring system according to claim 1, **characterised in that** the central distribution unit
(1) is arranged on an intake system of the internal combustion engine (7).

3. Electrical wiring system according to claim 1, **characterised in that** the control platform (6) is designed as a circuit board or FPC (flexible printed circuit) board.

4. Electrical wiring system according to claim 1, **characterised in that** the at least one electronic control assembly (5) performs motor control functions and/or gearbox control functions.

5. Electrical wiring system according to claim 1, **characterised in that** the control platform (6) in addition carries active and/or passive electrical and/or electronic components or assemblies (12, 13).

6. Electrical wiring system according to claim 5, **characterised in that** the electrical and/or electronic components or assemblies (12, 13) include power output stages, relays or fuses.

7. Drive arrangement of a vehicle with
- a drive motor (7), in particular internal combustion engine, which carries attachments and electrical function assemblies (4), and
- an electrical wiring system according to any of the preceding claims.

## Revendications

1. Système de câblage électrique pour l'unité d'entraînement dans des véhicules, en particulier pour un moteur à combustion équipé d'une transmission, avec
- une unité de distribution centrale (1), disposée sur le moteur d'entraînement (7) ou ses composants rapportés et comprenant une plate-forme de commande (6), avec au moins un groupe de commande électronique (5) contenant l'électronique de commande du moteur d'entraînement (7), faisant que le moteur d'entraînement complètement pré-cablé peut être testé fonctionnellement complètement, en tant qu'unité spécifique ;
- des premières liaisons électriques (2) entre le véhicule et l'unité de distribution (1) ;
- des deuxièmes liaisons électriques (3) entre l'unité de distribution (1) et des groupes fonctionnels (4) de l'unité d'entraînement (7) ou des groupes fonctionnels (4) dans un compartiment moteur environnant, présentant un connecteur (14) désolidarisable ;
- les premières (2) et deuxièmes (3) liaisons électriques étant réalisées chacune sous forme de liaisons de point en point, sans aucune ramification électrique ;
- lés branchements entre les premières (2) et deuxièmes (3) liaisons électriques sont réalisées dans l'unité de distribution centrale (1) ; des branchements, spécifiques aux variantes de moteur, sont réalisées dans l'unité de distribution centrale (1), par utilisation de ponts de commutation ;
- la plate-forme de commande (6) est de configuration modulaire pour réaliser différentes variantes de moteurs par insertion ou enlèvement de parties modulaires de plate-formes.

2. Système de câblage électrique selon la revendication 1, **caractérisé en ce que** l'unité de distribution centrale (1) est disposée sur une installation d'aspiration du moteur à combustion interne (7).

3. Système de câblage électrique selon la revendication 1, **caractérisé en ce que** la plate-forme de commande (6) est réalisée sous forme de platine de commutation ou de platine FPC (circuit flexible imprimé).

4. Système de câblage électrique selon la revendication 1, **caractérisé en ce que** le au moins un groupe de commande électronique (5) prend en charge des fonctions de commande du moteur et/ou des fonctions de commande de la transmission.

5. Système de câblage électrique selon la revendication 1, **caractérisé en ce que** la plate-forme de commande (6) comporte, en plus, des composants ou des groupes électriques et/ou électroniques (12,13) actifs et/ou passifs.

6. Système de câblage électrique selon la revendication 5, **caractérisé en ce que** les composants ou groupes (12,13) électriques et/ou électroniques comprennent des étages finaux de puissance, des relais ou des fusibles.

7. Dispositif d'entraînement d'un véhicule, comprenant :
- un moteur d'entraînement (7), en particulier un moteur à combustion, portant des parties rapportées et des groupes fonctionnels électriques (4), et
- un système de câblage électrique selon l'une des revendications précédentes.
